# EUROPÄISCHE PATENTSCHRIFT

(11) **EP 3 447 275 B1**
(45) Veröffentlichungstag und Bekanntmachung des Hinweises auf die Patenterteilung: **21.04.2021**
(21) Anmeldenummer: 17187228.6
(22) Anmeldetag: 22.08.2017
(51) Int. Cl.: F02M 21/02, F02B 19/00

(54) **GAS-INJEKTOR**
GAS INJECTOR
INJECTEUR DE GAZ

(43) Veröffentlichungstag der Anmeldung: 27.02.2019
(73) Patentinhaber: Eugen Seitz AG, 8623 Wetzikon (CH)
(72) Erfinder: Bronner, Michael, 8362 Balterswil (CH)
(74) Vertreter: Clerc, Natalia

(56) Entgegenhaltungen:
- EP-A1- 3 153 693
- WO-A1-2016/008055
- JP-A- H1 030 517
- JP-A- 2000 257 527
- JP-A- 2001 082 254

## Beschreibung

### TECHNISCHES GEBIET

Die vorliegende Erfindung betrifft einen Gas-Injektor, insbesondere für einen Verbrennungsmotor.

### STAND DER TECHNIK

Der Gas-Injektor, auch Einspritzventil genannt, dosiert beispielsweise Gas in eine Vorkammer oder in einen Brennraum eines Verbrennungsmotors, insbesondere eines Gasmotors. Es lässt sich bei Maschinen auch ein Rückschlagventil nachschalten, um Gas dosiert einzuspritzen zu können. Der Gas-Injektor wird üblicherweise elektromagnetisch, vorzugsweise mittels eines Solenoids, betrieben.

Zur Dosierung sind zwei Ventile notwendig, ein Schaltventil und ein Rückschlagventil, oder dem Schaltventil wird eine Düse nachgeschaltet, welche das Gas zur Brennstelle leitet. Dadurch entstehen Zwischenräume, welche aufgrund der Kompressibilität des Gases Schaltverzögerungen verursachen. Zudem verunreinigen diese Gas-Injektoren relativ schnell. Ablagerungen im Ventilbereich können jedoch das prozesssichere Schalten stören. Insbesondere Verrussungen im Bereich der Ventilsitze verursachen Funktionsprobleme der Verbrennungsmotoren. Des Weiteren müssen derartige Gas-Injektoren auch bei hohem Verbrennungsdruck eine sichere Abdichtung und leichte Schaltbarkeit gewährleisten.

US 7 124 998 B2 offenbart ein elektromagnetisch betätigbares Gasventil für Gasmotoren. Es weist einen Ventilsitz mit einer Durchströmöffnung und eine Dichtplatte mit Abströmöffnungen auf. Die Dichtplatte ist mittels einer Schliessfeder gegen den Ventilsitz belastet, wobei sie sich mittels eines Elektromagneten von diesem Ventilsitz abheben lässt. Die Dichtplatte ist an der Abströmseite des Ventilsitzes angeordnet und über einen durch den Ventilsitz ragenden Stempel mit einer Ankerplatte des Elektromagneten verbunden. Der Dichtplatte ist eine Venturidüse bzw. Lavaldüse nachgeordnet. Nachteilig an dieser Anordnung ist, dass die Venturidüse oder die Lavaldüse einen Totraum schaffen, in welchem sich Russ ansetzt und unverbrannte Kohlewasserstoffe entstehen.

Dieselben Nachteile weist auch US 9 453 456 auf. Dem konischen Ventilsitz folgt ein relativ langes Kraftstoffrohr, welches einen Totraum bildet und in welchem sich Russ festsetzen kann.

US 2011/0214639 offenbart ein Schaltventil und ein Dosierventil mit einem entsprechenden Zwischenraum, welcher zu Schaltverzögerungen führt.

EP 3 153 693, JP 2001 082254 A und WO 2016/008055 A1 offenbaren Injektoren mit einem am vordersten Ende angeordneten Ventilsitz.

JP 2000 257527 A und JP H 10 30517 offenbaren Injektoren mit zurückversetzten Ventilsitzen, wobei sich die Durchgangsöffnung anschliessend verjüngt.

### DARSTELLUNG DER ERFINDUNG

Es ist deshalb eine Aufgabe der Erfindung, einen möglichst verzögerungsarmen und wartungsfreien Gas-Injektor zu schaffen.

Diese Aufgabe löst ein Gas-Injektor mit den Merkmalen des Anspruchs 1.

Der erfindungsgemässe Gas-Injektor weist eine Injektorlanze, eine Antriebseinheit, eine Stösselstange und ein Ventil auf. Die Injektorlanze weist ein freies Ende zum Einspritzen von Gas in eine externe Einheit auf und die Antriebseinheit erzeugt eine Linearbewegung der Stösselstange, wodurch die Stösselstange das Ventil betätigt und eine Ventildurchlassöffnung freisetzt, um das Gas einzuspritzen. Erfindungsgemäss ist die Ventildurchlassöffnung im Bereich des freien Endes der Injektorlanze angeordnet.

Der erfindungsgemässe Gas-Injektor ist vorzugsweise elektrisch betätigbar. Die Antriebseinheit kann klassisch einen Elektromagneten beinhalten. Alternativ können piezoelektrische, hydraulische, pneumatische oder andere bekannte Antriebe verwendet werden.

Vorzugsweise ist die Antriebseinheit in einer Basiseinheit angeordnet und die Injektorlanze ist fest mit dieser Basiseinheit verbunden. Das freie Ende befindet sich logischerweise am antriebs-fernen bzw. am der Basiseinheit fernen Ende.

Dieser Gas-Injektor lässt sich als Einspritzventil verwenden. Er dosiert Gas in eine externe Einheit, insbesondere in eine Vorkammer oder direkt in einen Brennraum eines Verbrennungsmotors, insbesondere eines Gasmotors. Er lässt sich auch dazu verwenden, ein Gas unmittelbar vor oder in ein Einlassventil einer Maschine einzublasen. Er eignet sich insbesondere für Vorkammerzündung, Zündstrahlsysteme und für Schichtladungen.

Da die Ventilöffnung an einem freien Ende der Injektorlanze angeordnet ist, d.h. in einem äussersten Bereich, sind keine Toträume oder Zwischenräume vorhanden. Schaltverzögerungen durch kompressible Gase werden dadurch vermieden. Da dieses freie Ende in die Vor- oder Brennkammer ragen kann oder zumindest in unmittelbaren Kontakt dazu steht, kann die Verbrennung bzw. die Flammfront bis direkt an das Ventil, insbesondere an den Ventilsitz und an den Ventilteller vordringen und das gesamte Gas verbrennen. Unverbrannte Kohlenwasserstoffe werden dadurch minimiert.

Mindestens der Ventilteller und der Ventilsitz erreichen dank der Nähe zum Brennraum Selbstreinigungstemperatur. Allfällige Ablagerungen auf dem Ventilteller oder in anderen Brennraum-nahen Teilen des Ventils, werden abgebrannt und ein Verrussen minimiert. Dadurch wird die Reinigung des Injektors bei Wartungsarbeiten des Gasmotors überflüssig.

Die erwähnte Basiseinheit dient als Anschlussgehäuse. Sie beinhaltet die Antriebseinheit, insbesondere eine Solenoid-Einheit mit dem Elektromagneten und dessen Kühlmittelanschlüsse, sowie mindestens einen Anschluss für die Gasversorgungsleitung. Diese Anordnung ermöglicht eine kompakte Bauweise.

Vorzugsweise ist dieses Ventil das einzige Ventil des Gas-Injektors. Dies verhindert wiederum Zwischenräume, unverbrannte Kohlenwasserstoffe und Verrussungen.

Vorteilhaft ist ferner, dass die Injektorlanze und die Stösselstange eine beliebige Länge aufweisen können. Dadurch kann der erfindungsgemässe Gas-Injektor auf jede beliebige Länge angepasst werden. Vorzugsweise weist die Injektorlanze eine Länge und mindestens einen Durchmesser auf, wobei die Länge um ein Vielfaches grösser ist als der Durchmesser, insbesondere als der grösste dieser Durchmesser. Diese Bauform ist extrem schlank und der erfindungsgemässe Gas-Injektor lässt sich auch in Motoren einbauen, in welchen bekannte Injektoren aus Platzgründen nicht einsetzbar wären.

In einer bevorzugten Ausführungsform umfasst die Antriebseinheit eine Solenoid-Einheit. Vorzugsweise ist die Stösselstange mit einer Ankerplatte der Solenoid-Einheit fest verbunden, wobei die Ankerplatte durch Betätigung eines Elektromagneten der Solenoid-Einheit bewegbar ist. Durch das Anziehen der Ankerplatte bei Betätigung des Elektromagneten wird eine axiale Kraft zum Öffnen des Ventils aufgebracht. Vorzugsweise arbeiten alle beweglichen Teile beim Öffnen des Ventils spielfrei auf Schub.

In einer einfachen Ausführungsform durchsetzt die Stösselstange den Elektromagneten. Vorzugsweise ist jedoch eine Ankerspindel vorhanden, welche die Stösselstange mit der Ankerplatte verbindet, wobei die Ankerspindel im Zentrum des Elektromagneten geführt ist. Dadurch lässt sich die Basiseinheit mit der Solenoid-Einheit stets gleichbleibend ausbilden und lediglich die Längen der Injektorlanze und der Stösselstange müssen an die Motorgegebenheiten angepasst werden.

Vorzugsweise weist die Ankerspindel über mindestens einen Bereich ihrer Länge eine Spiralrille auf. Diese sorgt für einen Druckausgleich über und unter dem Solenoid. Zusätzlich ist die Führung weniger anfällig auf Verschmutzungen. Die Leichtgängigkeit ermöglicht Prozesssicherheit während der gesamten Injektor-Lebensdauer.

Vorzugsweise ist die Ankerspindel massiv ausgeführt, d.h. sie ist geschlossen ausgebildet und weist vorzugsweise keine oder keine wesentlichen Hohlräume auf.

Vorzugsweise weist das Ventil eine Ventilstange und einen daran angeordneten Ventilteller auf, wobei die Ventilstange mit der Stösselstange verbunden ist, um gemeinsam mit ihr in axialer Richtung linear verschiebbar zu sein. Vorzugsweise ist diese Verbindung lose. Auch dies erhöht die Flexibilität der Baugruppe. Die Ventileinheit kann stets gleichbleibend ausgebildet sein und lediglich die Längen der Stösselstange und des Schaftes müssen der Motorengeometrie entsprechend angepasst werden.

Vorzugsweise sind die Ventilstange und der Ventilteller aus einem Stück massiv gefertigt. Je nach Ausführungsform weist die Ventilstange einen Hohlraum auf, welcher mit einem anderen Stoff gefüllt ist. Auch diese Variante ist hier vom Begriff "massiv" mitumfasst.

In bevorzugten Ausführungsformen weist der Ventilteller eine entgegengesetzt zu einer Abströmrichtung des Gases gerichtete Dichtfläche auf, welche an einem Ventilsitz dichtend anliegt, um so die Ventildurchlassöffnung und damit das Ventil zu schliessen. Vorzugsweise ist der Ventilkegel in Abströmrichtung verschiebbar, um das Ventil zu öffnen. Bei steigendem Verbrennungsdruck erhöht sich so die Pressung im Ventilsitz und das Ventil kann sich nicht selbsttätig öffnen.

In bevorzugten Ausführungsformen ist an der Ventilstange des Ventilkegels eine Schliessfeder vorhanden, welche das Ventil in geschlossener Stellung hält bzw. in die geschlossene Stellung bringt. Vorzugsweise erfolgt die Schliessung somit nicht mittels des Elektromagneten sondern mittels der Federkraft. Beim Schliessen des Ventils erfährt der Ventilsitz somit vorzugsweise nur die Aufprallenergie des Ventilkegels.

In einer bevorzugten Ausführungsform entkoppelt sich die Stösselstange während des Schliessvorgangs vom Ventilkegel. Somit erfährt der Ventilsitz vorzugsweise nur die Aufprallenergie des Ventilkegels. Durch diese Massnahme, insbesondere bei Injektoren mit langen Stösselstangen, wird ein Prellen des Schaltventils verhindert. Durch die geringere Aufprallenergie wird zusätzlich die Lebensdauer des Injektors erhöht.

Die Stösselstange kann ebenfalls massiv ausgebildet sein. Vorzugsweise ist sie jedoch hohl ausgeführt. Dadurch wird eine hohe Steifigkeit bei gleichzeitig möglichst geringer zu bewegender Masse erhalten.

Erfindungsgemäß weist die Injektorlanze einen Schaft auf und die Stösselstange ist innerhalb des Schafts angeordnet und relativ zu diesem linear verschiebbar.

In einfachen Ausführungsformen bildet der Schaft selber einen Ventilsitz. Erfindungsgemäß ist das freie Ende der Injektorlanze jedoch durch einen Ventilkörper gebildet, welcher am Schaft angeordnet ist, wobei der Ventilkörper die Ventildurchlassöffnung aufweist. Vorzugsweise ist der Ventilkörper lösbar mit dem Schaft verbunden. Dies erleichtert die Herstellung, die Montage und auch die Wartung.

Vorzugsweise sind alle beweglichen Teile des Gas-Injektors, insbesondere die Stösselstange, die Ankerspindel und der Ventilkegel, radial geführt. Vorzugsweise sind sie verschiedene Bauteile, welche stirnseitig fest miteinander verbunden sind oder in Eingriff miteinander bringbar sind.

Vorzugsweise ist zusätzlich zur Schliessfeder eine zweite Feder, insbesondere eine Druckfeder, vorhanden. Diese zweite Feder gewährleistet ein spielfreies axiales Anliegen aller beweglichen Teile des Gas-Injektors, insbesondere der Antriebseinheit, in einer Ausgangsposition. Sie bringt insbesondere nach jedem Öffnen des Ventils die Stösselstange und, falls vorhanden, auch die Ankerspindel und die Ankerplatte in ihre ursprüngliche Ausgangsposition zurück.

Lässt sich beim Schliessen des Ventils die Stösselstange vom Ventilkegel trennen und/oder ist, wie oben erwähnt, eine zweite Feder vorhanden, welche beim Schliessen des Ventils die Bewegung der Ankerspindel und der Ankerplatte dämpft, lässt sich ein Prellen des Schaltventils, auch bei langen Schäften, verhindern und die Standzeit des Gas-Injektors erhöhen.

Vorzugsweise lassen sich die Federkraft der Schliessfeder, der allenfalls vorhandenen weiteren Feder sowie der Ventilhub bei der Montage individuell einstellen. Dadurch kann jeder einzelne Gas-Injektor auf spezifische Kundenwünsche abgestimmt werden. Beispielsweise lassen sich Schaltzeiten, Dosiermengen, Ansprechverhalten und anderes frei einstellen. Dadurch können alle Injektoren einer Herstellungscharge auf exakte Gleichstellung abgeglichen werden.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung einer Vorrichtung mit einem erfindungsgemässen Gas-Injektor, verbunden mit einer Vorkammer eines Verbrennungsmotors;
- Figur 2: eine Seitenansicht der Vorrichtung gemäss Figur 1;
- Figur 3: einen Längsschnitt durch die Vorrichtung entlang A-A gemäss Figur 2;
- Figur 4: einen ersten Längsschnitt durch den erfindungsgemässen Gas-Injektor gemäss Figur 1;
- Figur 5: einen zweiten Längsschnitt durch den erfindungsgemässen Gas-Injektor gemäss Figur 1;
- Figur 6: eine perspektivische Darstellung durch einen Injektorschaft des Gas-Injektors gemäss Figur 4;
- Figur 7: einen Längsschnitt durch den Injektorschaft gemäss Figur 6;
- Figur 8: eine vergrösserte Darstellung eines ersten Endbereichs des Injektorschafts gemäss B der Figur 6;
- Figur 9: eine vergrösserte Darstellung eines zweiten Endbereichs des Injektorschafts gemäss D der Figur 6;
- Figur 10: eine Seitenansicht einer Stösselstange des Gas-Injektors gemäss Figur 4;
- Figur 11: einen Längsschnitt durch die Stösselstange entlang A-A der Figur 10;
- Figur 12: eine Seitenansicht einer Ankerspindel des Gas-Injektors gemäss Figur 4;
- Figur 13: eine Seitenansicht eines Ventilkegels des Gas-Injektors gemäss Figur 4;
- Figur 14: eine perspektivische Darstellung einer Ventilführung des Gas-Injektors gemäss Figur 4;
- Figur 15: eine Seitenansicht der Ventilführung gemäss Figur 14;
- Figur 16: eine Seitenansicht mit Teilschnitt durch den Gas-Injektor gemäss Figur 4;
- Figur 17: eine vergrösserte Darstellung eines Endbereichs gemäss A der Figur 16;
- Figur 18: eine Seitenansicht eines Ventilkörpers des Gas-Injektors gemäss Figur 4;
- Figur 19: einen Längsschnitt durch den Ventilkörper gemäss Figur 18;
- Figur 20: eine Baugruppe des Gas-Injektors gemäss Figur 4 mit Ventilkörper, Ventilführung, Ventilkegel und Schliessfeder und
- Figur 21: einen Längsschnitt durch die Baugruppe gemäss Figur 20.

### BESCHREIBUNG BEVORZUGTER AUSFÜHRUNGSFORMEN

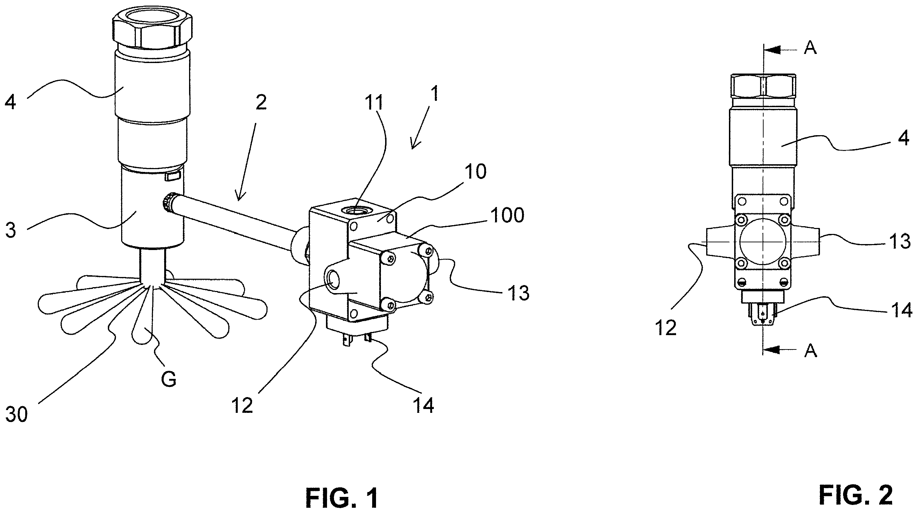

In den Figuren 1 bis 3 ist ein erfindungsgemässer Gas-Injektor in einer beispielhaften Anwendung dargestellt.

Der Gas-Injektor weist eine Basiseinheit 1 und eine Injektorlanze 2 auf. Die Basiseinheit 1 hat ein Basisgehäuse 10, welches mit einem Deckel 100 dicht verschlossen ist. Auf einer Seite des Basisgehäuses 10 ist ein Gasanschluss 11 vorhanden und auf einer gegenüberliegenden Seite ist ein elektrischer Stecker 14 angeordnet. Im Deckel 100 befinden sich ein Kühlmitteleinlass 12 und ein Kühlmittelauslass 13.

Anstelle des Steckers 14 kann auch ein elektrischer Anschluss fest mit dem Gehäuse verbunden sein. Dies ist insbesondere dann vorteilhaft, wenn der Gas-Injektor bei hohen Umgebungstemperaturen eingesetzt werden soll.

Alternativ zum gezeigten Gasanschluss 11 der Basiseinheit lässt sich auch die Injektorlanze 2, genauer der nachfolgend beschriebenen Schaft 20, mit einer Bohrung oder mit mehreren Bohrungen versehen, um Gas einzuführen. In diesem Fall wird vorzugsweise eine Hohldruckschraube verwendet, um eine Brenngas-Abdichtung zwischen Injektorlanze 2 und Zylinderkopf eines Verbrennungsmotors zu gewährleisten.

Die Injektorlanze 2 ist lang und schmal ausgebildet und steht in einer festen und gasdichten Verbindung mit der Basiseinheit 1.

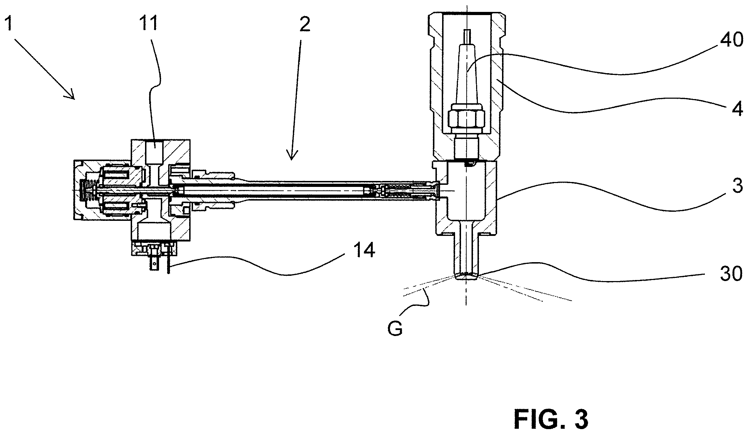

Ein der Basiseinheit 1 abgewandtes freies Ende der Injektorlanze 2 lässt sich, wie hier dargestellt, mit einer Vorkammer 3 eines Verbrennungsmotors, insbesondere eines Gasmotors, verbinden. Die Vorkammer 3 weist Düsenbohrungen 30 auf, durch welche das entflammte Gas-Luftgemisch in den Brennraum des Verbrennungsmotors eingestrahlt wird und damit die Hauptladung im Zylinder gezündet wird. Somit kann der Zündverzug insbesondere bei grossen Gasmotoren deutlich vermindert werden. Das über den Gasanschluss 11 in den Gas-Injektor eingeführte und von dort in die Vorkammer 3 eingespritzte Gas stellt auch bei magerem Gemisch im Zylinder eine prozesssichere Zündung sicher. Die Brennkammer ist hier nicht dargestellt. Das aus den Düsenbohrungen 30 austretende und brennende Gas-Luftgemisch ist in den Figuren 1 und 3 erkennbar und mit dem Bezugszeichen G versehen.

Im hier dargestellten Beispiel befindet sich im oberen Bereich der Vorkammer 3 ein Gehäuse 4 mit einer Zündkerze 40.

Der erfindungsgemässe Gas-Injektor lässt sich auch in anderen Anordnungen verwenden. Beispielsweise lässt er sich auch direkt in den Brennraum einführen.

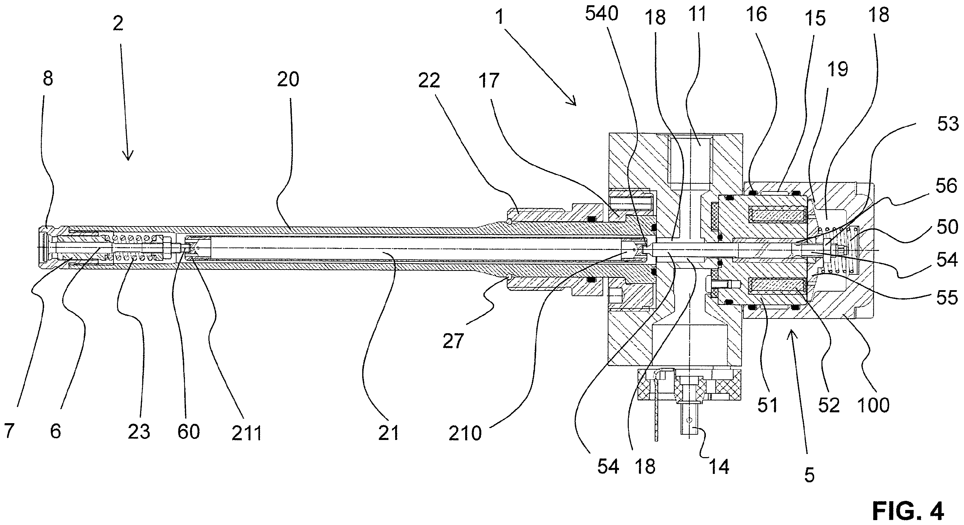

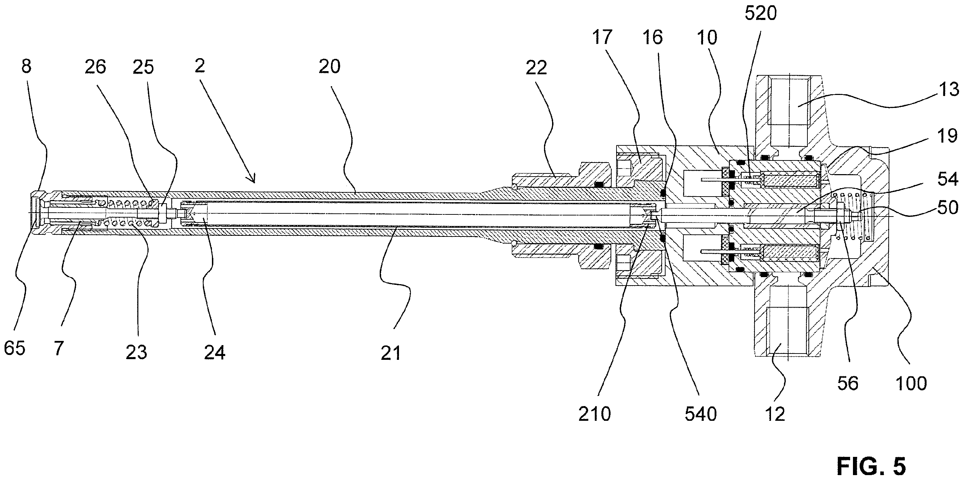

Die Figuren 4 und 5 zeigen zwei Längsschnitte durch den erfindungsgemässen Gas-Injektor. Die Längsschnitte stehen rechtwinklig zueinander.

In der Basiseinheit 1 ist eine Antriebseinheit angeordnet. Die Antriebseinheit umfasst in diesem Beispiel einen Elektromagneten, insbesondere eine Solenoid-Einheit 5. Alternative Antriebe wie eingangs erwähnt können jedoch auf dieselbe Weise mit den übrigen erwähnten Elementen dieses Ausführungsbeispiels sinngemäss kombiniert und erfindungsgemäss eingesetzt werden.

Die Solenoid-Einheit 5 weist eine Spule 52 und einen Magnetkern 51 auf. In Figur 5 sind die gecrimpten Anschluss-Pins 520 der Spule 52 erkennbar, welche über den Stecker 14 eine Verbindung nach aussen erstellen.

Auch in Figur 5 dargestellt sind der Kühlmitteleinlass 12 und der Kühlmittelauslass 13. Sie führen in eine ringförmige Kühlmittelkammer 15, welche den Magnetkern 51 umgibt. Das Kühlmittel umspült den Magnetkern 51 und hält den Elektromagneten auf eine gewünschte Betriebstemperatur. Es ist eine Flüssigkeit oder auch ein Gas. Idealerweise wird ein Fluid verwendet, welches bereits am Motor vorhanden ist, z.B. Kühlwasser, Motorenöl oder ein anderes wärmetragendes Fluid. Je nach Umgebungstemperatur, bei welcher der Gas-Injektor eingesetzt werden soll, ist auch die Wärmeabstrahlung an die Umgebung ohne zusätzlichen Anschluss an ein Kühlmedium ausreichend.

In einer zentralen Durchgangsöffnung der Solenoid-Einheit 5 ist eine Führungs- und Prellbuchse 53 angeordnet, welche von einer Ankerspindel 54 durchsetzt ist. Die Ankerspindel 54 greift mit ihrem Aussengewinde in ein Innengewinde einer Ankerplatte 55 ein und ist zudem mittels einer Kontermutter 56 an der Ankerplatte 55 lagefixiert gehalten. Die Ankerplatte 55 wird beim Anzug des Elektromagneten vorzugsweise über die Führungs- und Prellbuchse 53 auf Abstand gehalten, sodass die Ankerplatte nie auf dem Magnetkern 51 aufliegen kann. Somit wird beim Abschalten der elektrischen Energie ein magnetisches Kleben verhindert und dadurch das Schliessen des Ventils beschleunigt.

Der Deckel 100 weist oberhalb der Ankerplatte 55 einen oberen Anschlag 19 auf.

Eine Druckfeder 50 wirkt auf die Ankerplatte 55 und drückt diese in Richtung Magnetkern 51. In Ruheposition befindet sich die Ankerplatte 55 jedoch beabstandet zum Magnetkern 51. Die Druckfeder 50 ist im Deckel 100 gehalten. Sie weist im Vergleich zu einer nachfolgend beschriebenen Schliessfeder 23 eine um ein Vielfaches geringere Federkraft auf. Die Druckfeder 50 bringt nach dem überschwingenden Schliessvorgang alle beweglichen Teile der Antriebseinheit wieder spielfrei in Ausgangsposition und bereitet somit den Injektor auf den nächsten Schaltvorgang vor.

In der Basiseinheit 1 sind mehrere dichtende O-Ringe angeordnet, welche als schwarz ausgefüllte Flächen dargestellt sind. Beispielhaft sind zwei dieser O-Ringe mit dem Bezugszeichen 16 versehen.

In Figur 4 ist der Gasanschluss 11 erkennbar. Er endet in einer zylinderförmigen Gaskammer 18, die von der Ankerspindel 54 durchsetzt ist und welche sich an der der Ankerplatte 55 gegenüberliegenden Seite des Magnetkerns 51 befindet. Die Gaskammer 18 ist durch eine erste Sackbohrung im Basisgehäuse 10 gebildet. Diese erste Bohrung 18 führt das Gas in Richtung des Schaltventils.

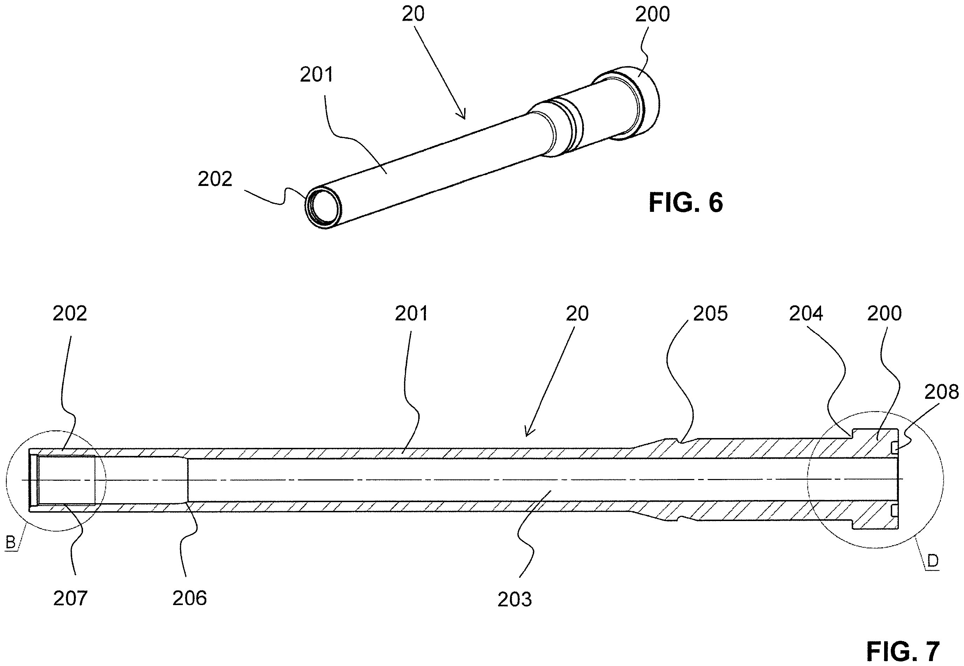

Die Injektorlanze 2 weist einen langen, schmalen rohrförmigen Injektorschaft 20 auf, dessen zentrale Achse mit der zentralen Achse der Ankerspindel 54 und der zylinderförmigen Gaskammer 18 fluchtet bzw. deren Verlängerung bildet. Der Injektorschaft 20 weist eine Durchgangsöffnung 203 auf (siehe Figur 7), dessen Durchmesser vorzugsweise gleich und noch bevorzugter grösser ist als der Durchmesser der Gaskammer 18.

Die Injektorlanze 2, genauer der Injektorschaft 20, liegt an der inneren Grundfläche der zweiten Sackbohrung an und ist mittels eines O-Rings 16 nach aussen gedichtet. Der Injektorschaft 20 ist mittels einer Befestigungsmutter 17, welche in das Innengewinde der zweiten Sackbohrung eingeschraubt ist, im Basisgehäuse 10 fixiert gehalten.

Im Injektorschaft 20 ist eine Stösselstange 21 in Längsrichtung verschiebbar angeordnet. Die Stösselstange 21 ist vorzugsweise ein dünnwandiges Rohr mit zwei einander gegenüberliegenden offenen Enden, welche durch einen ersten Stösselstangenkopf 210 und einen zweiten Stösselstangenkopf 211 teilweise verschlossen sind. Die zwei Stösselstangenköpfe 210, 211 weisen Druckausgleichsbohrungen 212, 213 auf, welche weiter unten im Text im Detail beschrieben sind.
Der erste Stösselstangenkopf 210 befindet sich benachbart zur Ankerspindel 54 und ist mit dem dünnwandigen Stösselrohr 215 unlösbar verbunden. Die Ankerspindel 54 weist einen Ankerspindelkopf 540 auf, welcher im Sackbohrungsgrund des ersten Stösselstangenkopfes 210 aufliegt. Das gegenüberliegende Ende der Ankerspindel 54 ist durch einen Ankerspindelfuss 541 gebildet, welcher die Kontermutter 56 überragt.

Der erste und der zweite Stösselstangenkopf 210, 211 sind vorzugsweise identisch ausgebildet. Sie können jedoch auch unterschiedlich geformt sein. Beide Stösselstangenköpfe 210, 211 sind unlösbar mit dem dünnwandigen Stösselrohr 215 verbunden.

Der zweite Stösselstangenkopf 211 und somit das zweite Ende der Stösselstange 21 liegt lose auf dem Ventilkegel 6 auf. In diesem Beispiel weist auch der zweite Stösselstangenkopf 211 eine Sackbohrung auf, welche die Stösselstange 21 am Ventilkegel 6, genauer an einem Ventilfuss 60, radial führt. In einer anderen Ausführungsform ist die Verbindung zwischen Ventilfuss 60 und Stösseltangenkopf 211 fest. Vorzugsweise lassen sich Ventilfuss 60 und Stösselstangenkopf 211 jedoch bei Bewegung entgegen der Abströmrichtung entkoppeln.

Der Ventilkegel 6 durchsetzt das vordere freie Ende des Injektorschaftes 20 und endet in einem Ventilkörper 8. Der Ventilkörper 8 ist auf das freie Ende des Injektorschafts 20 aufgeschraubt oder anderweitig fest und vorzugsweise dicht mit diesem verbunden. Der Ventilkörper 8 und der Injektorschaft 20 bilden vorzugsweise die äussere Hülle der Injektorlanze 2.

Der Ventilkörper 8 bildet einen Ventilsitz, welcher nachfolgend noch genauer beschrieben wird. Der Ventilkegel 6 weist einen entsprechenden Ventilteller 65 auf, welcher ebenfalls nachfolgend noch genauer beschrieben wird. Der Ventilkegel 6 ist innerhalb einer hülsenförmigen Ventilführung 7 verschiebbar gehalten und radial geführt, wobei sein Ventilteller 65 mittels einer Schliessfeder 23 an den Ventilsitz angepresst wird, sodass in der Ruheposition das Ventil geschlossen ist.

In den Figuren 4 und 5 sind der Federteller 26, die Schliessfeder 23 sowie eine Kontermutter 25, mittels welcher der Ventilkegel 6 fest mit der Schliessfeder 23 verbunden ist, dargestellt.

Auf der Injektorlanze 2 ist ferner eine Hohldruckschraube 22 aufgebracht, welche benachbart aber beabstandet zum Befestigungsmutter 17 angeordnet ist. Diese Hohldruckschraube 22 dient vorzugsweise zur Montage des Gas-Injektors an eine externe Einheit, insbesondere an einen Motor, beispielsweise an einen Gasmotor. Der Gas-Injektor kann jedoch auch alternativ auf andere Weise am oder im Motor befestigt werden. Je nach Ausführungsform lässt sich beispielsweise die Basiseinheit mit Schrauben am Motor verbauen.

In den Figuren 6 bis 9 ist der Injektorschaft 20 gut erkennbar. Er weist einen hohlzylinderförmigen Schaftkopf 200 mit einer stirnseitig angeordneten ringförmigen Nut 208 zur Aufnahme eines dichtenden O-Rings auf. Der Schaftkopf 200 geht in einer äusseren Stufe 204 in das Injektorrohr 201 über. Das Injektorrohr weist zuerst einen Bereich mit einem ersten Aussendurchmesser und anschliessend einen Bereich mit einem zweiten Aussendurchmesser auf, wobei der erste Durchmesser grösser ist als der zweite Durchmesser. Zwischen diesen zwei Bereichen befindet sich ein Übergangsbereich mit einer ringförmigen umlaufenden äusseren Nut 205 und einer Abschrägung. Die äussere Stufe 204 steht, wie durch Zusammenschau der Figuren 4 und 7 gut erkennbar ist, an einer entsprechenden Stufe der Befestigungsmutter 17 an. Die äussere Nut 205 dient zur Aufnahme eines Sprengrings 27, welcher die Hohldruckschraube 22 fixiert.

Die Durchgangsöffnung 203 des Injektorschafts 20 weist vorzugsweise einen gleichbleibenden Innendurchmesser auf mit Ausnahme eines freien Endbereichs, welcher dem Schaftkopf 200 abgewandt ist. Im Endbereich sind die Schliessfeder 23 und der Ventilkegel 6 angeordnet, wie durch Zusammenschau der Figuren 4 und 7 gut erkennbar ist. In diesem Endbereich ist eine innere Stufe 206 vorhanden. Der Endbereich weist vorzugsweise einen leicht grösseren Durchmesser auf als der restliche Injektorschaft. Im freien offenen Ende 202 des Injektorschafts 20 ist ein Innengewinde 207 vorhanden sowie am vordersten Ende eine weitere innere Stufe, wobei das vorderste Ende gewindefrei, aber mit erweitertem Durchmesser ausgebildet ist.

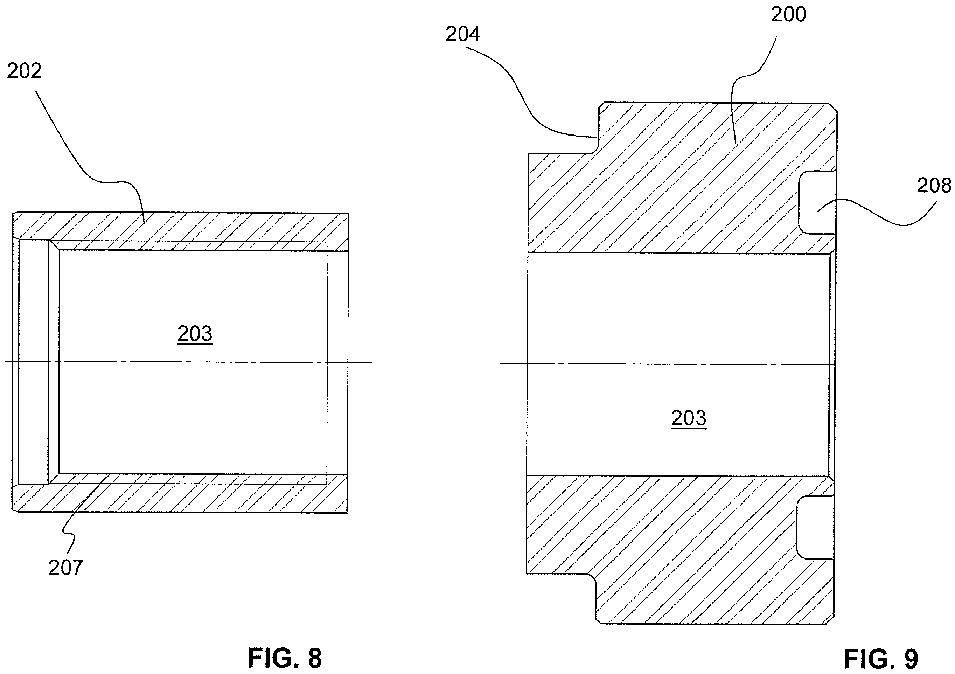

Dieses freie offene Ende 202 ist in Figur 8 vergrössert dargestellt. Figur 9 zeigt den Schaftkopf 200 in vergrösserter Darstellung.

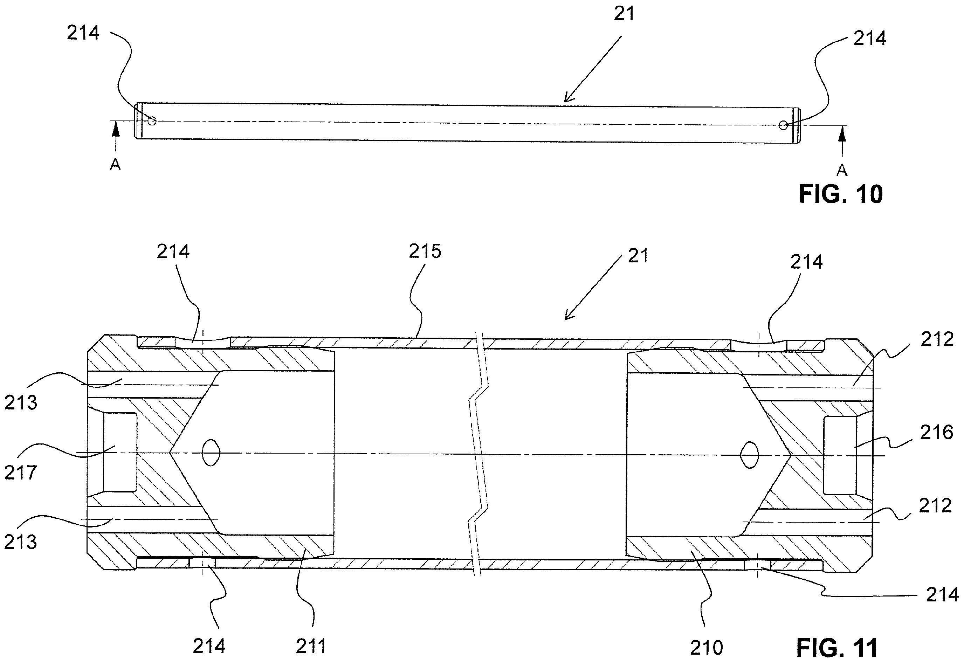

Die Figuren 10 und 11 zeigen die Stösselstange 21. Sie ist durch ein dünnwandiges Rohr 215 gebildet, welches an beiden Enden mit einem das jeweilige Ende teilweise verschliessenden Stösselstangenkopf 210, 211 versehen ist. Diese Köpfe 210, 211 sind Einsätze, welche auf die Stirnseiten des Rohrs 215 aufgepresst sind und in das Rohr 215 hineinragen. Der erste und zweite Stössestangenkopf 210, 211 sind vorzugsweise identisch ausgebildet. Sie können jedoch auch unterschiedlich geformt sein.

Ein erster Stössestangenkopf 210 ist am solenoidnahen Ende der Stösselstange 21 angeordnet. Er weist einen zylinderförmigen Grundkörper mit einem sich erweiternden Flansch auf, welcher auf dem Rohr 215 aufliegt. Die Stirnseite des Flansches ist mit einer Sackbohrung versehen, welche als erste Eingriffsöffnung 216 dient. In diese erste Eingriffsöffnung 216 greift, wie durch Zusammenschau der Figuren 11 und 4 gut erkennbar ist, der Ankerspindelkopf 540 der Ankerspindel 54 und führt die Stösselstange 21 radial. Die Verbindung zwischen Stösselstange 21 und Ankerspindel 54 ist somit lose bzw. lässt sich entkoppeln. Alternativ kann die Verbindung jedoch auch fest ausgeführt sein.

Die Stösselstangenköpfe 210, 211 sind mit Druckausgleichsbohrungen 212, 213 versehen, welche sich in Längsrichtung der Stösselstange 21 erstrecken und eine Verbindung zwischen der Gaskammer 18 und den hohlen Innenraum der Stösselstange 21 schaffen.Die Druckausgleichsbohrungen 212, 213 stellen sicher, dass im Stösselstangenrohr 215 der gleiche Druck herrscht wie im Injektorschaft 20. Zusätzlich wird durch die Druckausgleichsbohrungen 212, 213 das Durchströmen des Gases erleichtert und somit der Strömungswiderstand verringert.

Ein zweiter Stösselstangenkopf 211 befindet sich am gegenüberliegenden Ende der Stösselstange 21. Er ist gleich aufgebaut wie der erste Stösselstangenkopf 210 mit einer zweiten Eingriffsöffnung 217 und mit zweiten Druckausgleichskanälen 213.

Das Rohr 215 weist im Bereich der Stösselstangenköpfe 210, 211 ebenfalls unterschiedlich grosse Lötbohrungen 214 auf. Um die Stösselstangenköpfe unlösbar mit dem Stösselstangenrohr 215 zu verbinden, werden diese miteinander verlötet. Bei der Herstellung wird während des Lötvorgangs Lot durch die Lötbohrungen 214, welche grosse Öffnungen aufweisen, zugeführt. Durch die Lötbohrungen mit kleineren Öffnungen wird die Luft aus dem Zwischenraum verdrängt. Alternativ kann die Verbindung zwischen dem Rohr 215 und den Köpfen 210, 211 auch durch eine Presspassung, Schweissverbindung oder ähnliches erfolgen.

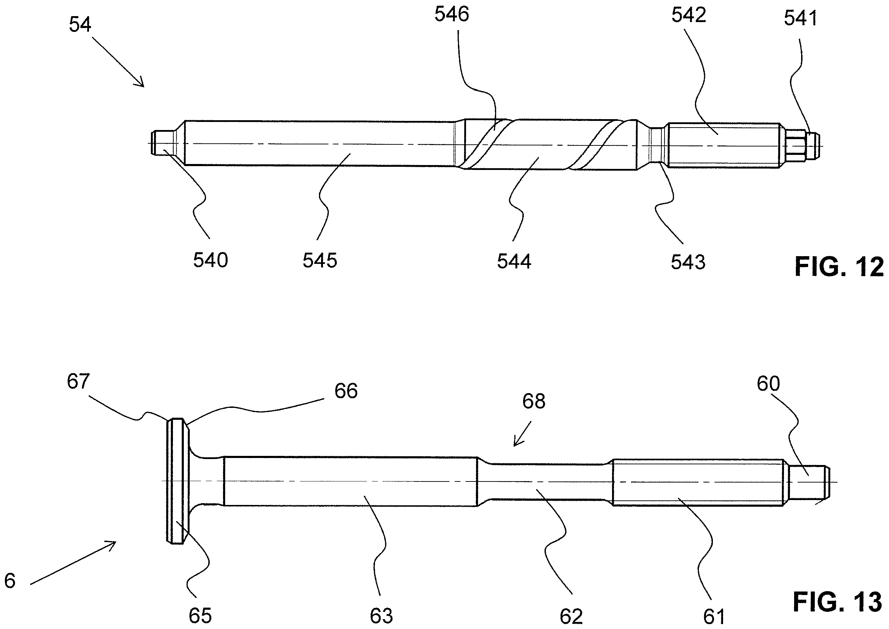

In Figur 12 ist die Ankerspindel 54 dargestellt. Sie ist vorzugsweise massiv ausgebildet, vorzugsweise ohne inneren Hohlraum. Sie weist mehrere zylinderförmige Abschnitte auf. Ein erstes Ende ist durch den Ankerspindelfuss 541 gebildet, welcher sich zu einem zylinderförmigen ersten Abschnitt 542 mit einem Aussengewinde erweitert. Eine nachfolgende Freistellnut 543 in Form einer Verjüngung führt in einen zweiten Abschnitt 544 über, welcher vorzugsweise einen grösseren Aussendurchmesser aufweist als der erste Abschnitt 542. Der zweite Abschnitt 544 weist eine sich annähernd über seine gesamte Länge erstreckende Spiralrille 546 auf. Eine Stufe führt zu einem dritten Abschnitt 545, welcher vorzugsweise wiederum einen kleineren Aussendurchmesser aufweist und vorzugsweise über eine glatte Oberfläche verfügt. Der dritte Abschnitt 545 verjüngt sich in den Ankerspindelkopf 540.

Wie durch die Zusammenschau der Figuren 12 und 4 gut erkennbar ist, überragt der Ankerspindelfuss 541 die Kontermutter 56. Die Ankerspindel ist mit einer Schlüsselfläche, z.B. Aussensechskant versehen, um die Position der Ankerplatte exakt einstellen zu können. Das Aussengewinde des ersten Abschnitts 542 greift in die Ankerplatte 54 ein und bewegt sich bei Betätigung des Solenoids gemeinsam mit dieser und der Kontermutter 56.

Der zweite Abschnitt 544 gleitet innerhalb der Führungs- und Prellbuchse 53, wobei die Spiralrille 546 für einen Druckausgleich auf beiden Solenoid-Seiten sorgt. Zudem ist die Führung mit Hilfe der Spiralrille 546 unempfindlicher gegen Verschmutzungen. Die Spindelführung 54 ist zudem vorzugsweise plasmabeschichtet, um sich dauerhaft schmierungsfrei in der Führungsprellbuchse bewegen zu können. Das Passungsspiel des Schiebeverbands kann somit sehr eng gewählt werden, ohne dass es zum Klemmen kommen kann. Somit verbessert die Spiralrille 546 auch die Führungseigenschaften der Passung.

Der dritte Abschnitt 545 reicht von der Solenoid-Einheit bis zur Gaskammer 18 und verbindet dank des Ankerspindelkopfes 540 die Ankerspindel 54 mit der Stösselstange 21.

Figur 13 zeigt den Ventilkegel 6. Er weist eine massiv ausgebildete Ventilstange 68 mit mehreren zylinderförmigen Abschnitten sowie den an einem Ende ausgebildeten Ventilteller 65 auf. Ein der Stösselstange 21 zugewandtes Ende bildet den Ventilfuss 60. Ein nachfolgender erster zylinderförmiger Abschnitt 61 weist einen grösseren Aussendurchmesser auf als der Ventilfuss 60. Ferner verfügt er über ein Aussengewinde.

Ein nachfolgender zylinderförmiger zweiter Abschnitt 62 bildet eine Verjüngung, wobei ein zylinderförmiger dritter Abschnitt 63 wiederum einen grösseren Durchmesser aufweist. Der Mantel des zweiten und des dritten Abschnitts 62, 63 ist vorzugsweise glatt ausgebildet. Der dritte Abschnitt 63 erweitert sich und geht in den genannten Ventilteller 65 über, welcher vorzugsweise im Wesentlichen als flache, kreisförmige Platte mit einer vorzugsweise planen Stirnfläche ausgebildet ist.

Der Ventilteller 65 weist zum dritten Abschnitt, also entgegengesetzt zur Abströmrichtung des über den Injektor eingespritzten Gases, eine umlaufende Abschrägung auf, welche die Dichtfläche 66 des Ventils bildet. Die Dichtfläche 66 bildet somit einen Kegelstumpf mit einem Öffnungswinkel von vorzugsweise annähernd 120°. Die gegenüberliegende Seite des Ventiltellers 65 ist ebenfalls vorzugweise abgeschrägt und bildet eine Keilfläche 67. Vorzugsweise ist dieser Winkel kleiner, sodass ein Kegelstumpf mit einem Öffnungswinkel von vorzugsweise annähernd 60° gebildet ist. Die zwei Kegelstümpfe sind in entgegengesetzte Richtungen zueinander geneigt, d.h. der Ventilteller 65 verjüngt sich in beide Richtungen nach aussen.

Wie durch die Zusammenschau der Figuren 13 und 4 gut erkennbar ist, ist der Ventilfuss 60 in der Sackbohrung 217 des zweiten Stösselstangenkopfes 211 aufgenommen oder fest gehalten. Der Ventilkegel 6 durchsetzt das vordere Ende des Injektorschafts 20 und die Ventilführung 7 und ragt mit dem Ventilteller 65 aus beiden heraus.

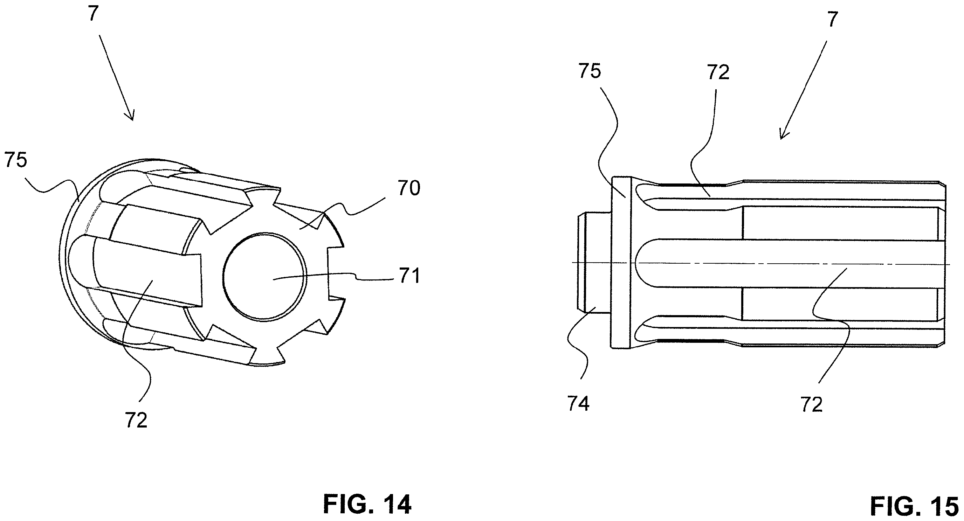

In den Figuren 14 und 15 ist die Ventilführung 7 dargestellt. Sie weist einen hohlzylinderförmigen Grundkörper 70 auf, dessen Manteloberfläche mit Längsnuten 72 versehen ist. Die Längsnuten 72 bilden Verbindungskanäle für das Gas.

Eine Durchgangsöffnung der Ventilführung 7 trägt das Bezugszeichen 71. Sie dient als Ventilschaftführung. An den Grundkörper 70 grenzt ein umlaufender Flansch 75 an, welcher in einen hohlzylinderförmigen Fuss übergeht. Dieser bildet eine Federführung 74. Die Federführung 74 weist einen kleineren Aussendurchmesser auf als der Grundkörper 70 und dient als Zentrierung für die Schliessfeder 23.

Wie sich durch die Zusammenschau der Figuren 15 und 4 gut erkennen lässt, ragt die Federführung 74 der Ventilführung 7 in den Hohlraum der Schliessfeder 23 hinein. Der Grundkörper 70 wird über die Axialkraft der Schliessfeder 23 lagefixiert im Ventilkörper 8 gehalten.

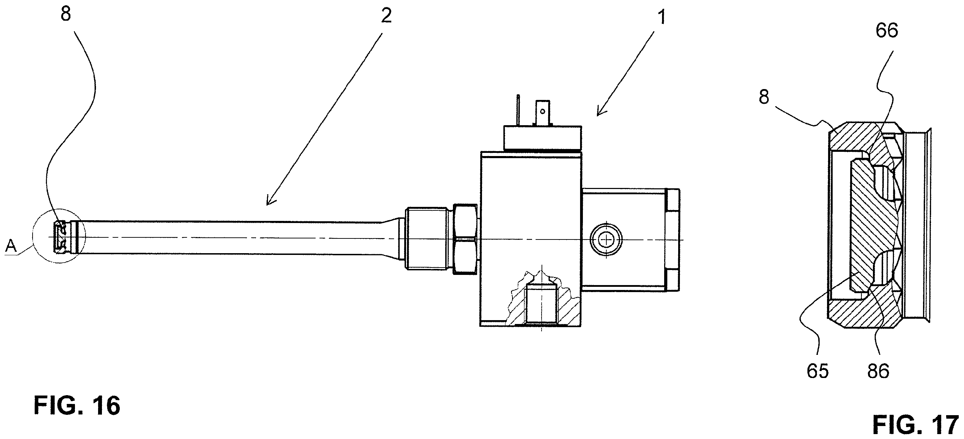

Anhand der Figuren 16 bis 19 wird nachfolgend der Ventilkörper 8 beschrieben. Er bildet das vorderste freie Ende des erfindungsgemässen Gas-Injektors, wie in Figur 16 gut erkennbar ist. Figur 17 ist eine vergrösserte Darstellung des Ausschnitts A gemäss Figur 16. Der Ventilkörper 8 ist hier nur teilweise dargestellt, wobei gut erkennbar ist, dass der Ventilteller 65 mit seiner kegelstumpfförmigen Dichtfläche 66 an einem passend geformten ersten Anschlag des Ventilkörpers 8 ansteht. Dieser erste Anschlag bildet den Ventilsitz 86 des erfindungsgemässen Gasventils.

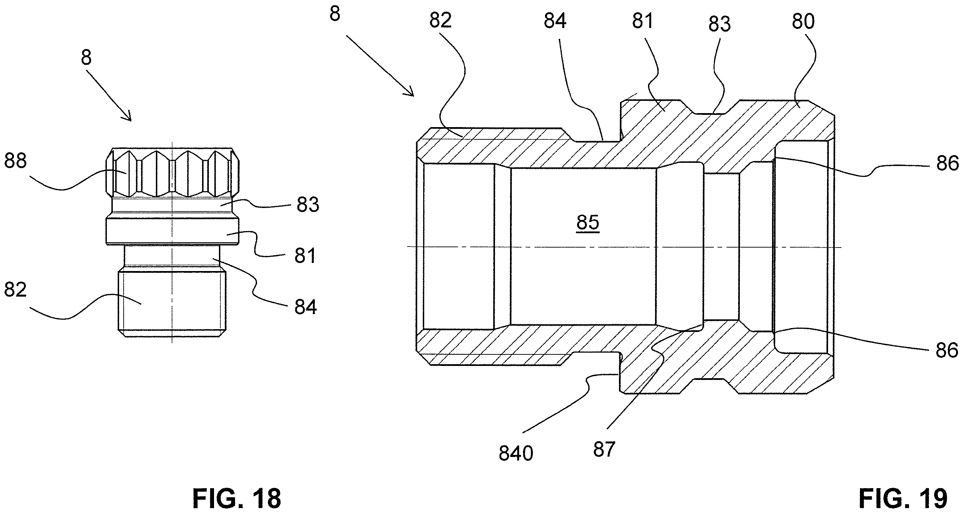

Wie in den Figuren 18 und 19 erkennbar ist, weist der Ventilkörper 8 im Wesentlichen eine Grundform mit mehreren hohlzylinderförmigen Abschnitten auf. Ein erster Abschnitt 80 bildet das vorderste freie Ende des Gas-Injektors. Der erste Abschnitt 80 ist mit einem Doppelsechskant 88 versehen, um diesen prozesssicher in den Injektorschaft montieren zu können. Anstelle der Doppelsechskant-Verzahnung können auch andere form- oder kraftschlüssige Eindrehmöglichkeiten zum Einsatz kommen.

Der erste Abschnitt 80 geht über eine erste Verjüngung 83 in einen zweiten Abschnitt 81 über. Eine zweite Verjüngung 84 führt anschliessend in einen dritten Abschnitt 82 mit geringerem Aussendurchmesser und einem Aussengewinde. Die zweite Verjüngung 84 erfolgt in einer radial verlaufenden Stufe, sodass ein senkrecht zur Längsachse ausgerichteter äusserer Anschlag 840 gebildet ist, welcher als Dichtfläche zum Injektorschaft dient.

Eine Durchgangsöffnung 85 verläuft durch den gesamten Ventilkörper 8. Im Bereich des ersten Abschnitts 80 zum vorderen freien Ende des Gas-Injektors hin ist der Durchmesser erweitert, wobei die Durchgangsöffnung 85 in diesem Bereich einen gleich bleibenden Durchmesser aufweist, bis sie zu einem senkrecht verlaufenden, d.h. radial verlaufenden Sims oder Balkon führt, welcher als Anschlag dient. Dieser Anschlag bildet den Ventilsitz 86.

Anschliessend verläuft die Durchgangsöffnung 85 in Richtung entgegengesetzt zur Abströmrichtung des Gases in mehreren Stufen, wobei sich der Innendurchmesser des Ventilkörpes verjüngt und erweitert. Im Bereich der ersten Verjüngung 83 ist eine weitere radial verlaufende Stufe vorhanden, welche einen zweiten Anschlag 87 bildet.

Wie durch die Zusammenschau der Figuren 19 und 4 gut erkennbar ist, steht das freie Ende des Injektorschafts 20 an der äusseren Stufe 840 des Ventilkörpers 8 an und der dritte Abschnitt 82 ragt in den Injektorschaft 20 hinein. Das Aussengewinde des dritten Abschnitts 82 greift dabei in das Innengewinde des Injektorschafts 20 ein.

Die Ventilführung 7 steht am zweiten Anschlag 87 an und der Ventilteller 65 ragt in die vorderste Kammer des Ventilkörpers 8.

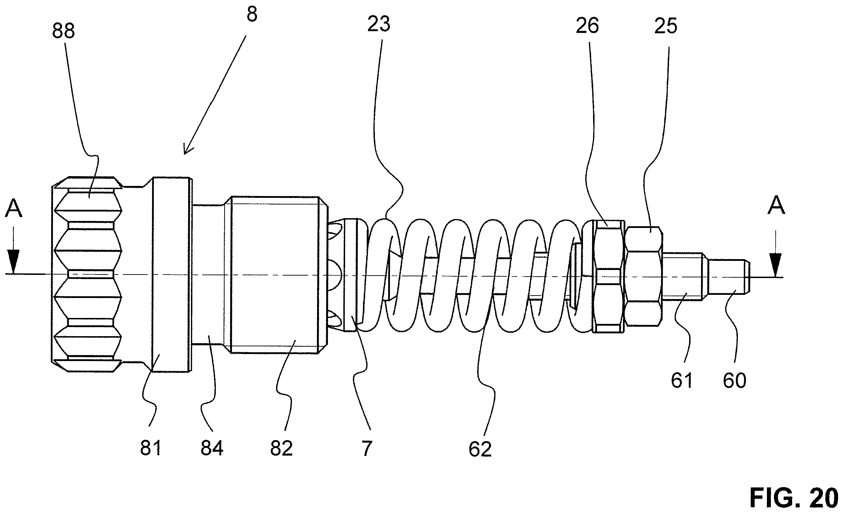

In den Figuren 19 und 20 ist die Baugruppe bestehend aus Ventilkörper 8, Ventilführung 7, Ventilkegel 6 und Schliessfeder 23 dargestellt. Es ist gut erkennbar, wie der Ventilteller 65 am Ventilsitz 86 des Ventilkörpers 6 ansteht und so abdichtet.

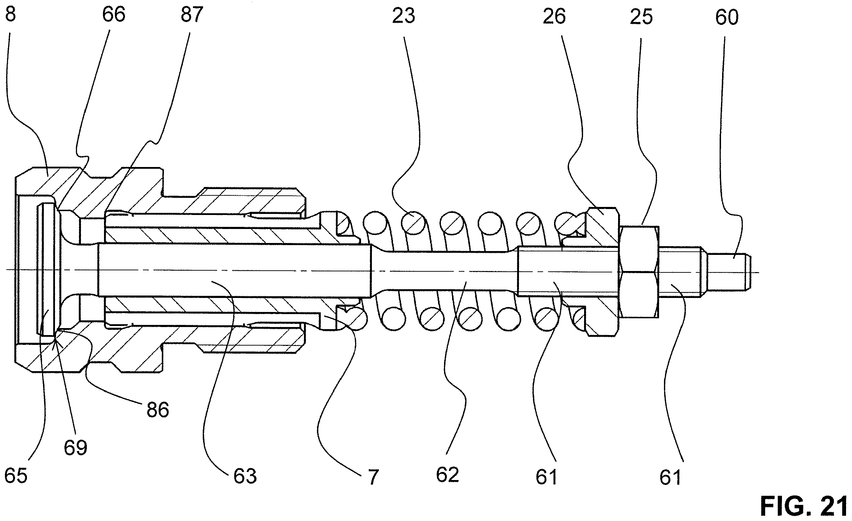

Beim Öffnen des Ventils ergibt sich somit zwischen dem Ventilteller 65 und dem Ventilsitz 86 eine Ventildurchgangsöffnung, welche in Figur 21 mit dem Bezugszeichen 69 versehen ist. Zu bemerken ist, dass in dieser Figur 21 das Ventil in geschlossener Stellung dargestellt ist, sodass der Ort der Öffnung 69 erkennbar, aber die Öffnung 69 selber nicht sichtbar ist.

Vorzugsweise ist der erfindungsgemässe Gas-Injektor aus korrosionsunempfindlichen Materialien gefertigt. Dies verhindert Gas-Leckagen durch Korrosion oder Ventilabbrand. Insbesondere der Ventilteller ist vorzugsweise aus entsprechendem Material gefertigt, wobei sich beispielsweise Nickelbasislegierungen als vorteilhaft erweisen. Vorzugsweise sind der Schaft 20 und die Stösselstange 21 aus Materialien mit gleichem oder ähnlichem Längenausdehnungskoeffizienten gefertigt, sodass Temperaturausdehnungen kompensiert werden können. Je nach Anwendungsbereich ist es vorteilhaft, wenn die Bauteile des Gas-Injektors kupferfrei oder zumindest gasdicht vergossen sind. Dies ist insbesondere bei Verwendung des Gas-Injektors mit Biogas oder anderen Ammoniakverbindungen aufweisenden Gase vorteilhaft.

Die Ankerspindel 54 und der Ventilkegel 6 arbeiten vorzugsweise ohne Schmierung. Dies lässt sich beispielsweise erreichen, indem sie bei der Herstellung einer Plasma-Oberflächenbehandlung unterzogen werden.

Anhand der Zusammenschau der Figuren 4, 5 und 21 wird nachfolgend die Wirkungsweise des Gas-Injektors erläutert.

Im Ruhezustand bzw. in der Ausgangsposition drückt die Schliessfeder 23, welche als Druckfeder ausgebildet ist, den Ventilteller 65 in Richtung des ersten Absatzes, d.h. in Richtung des Ventilsitzes 86 des Ventilköpers 8, und hält somit das Ventil in der geschlossenen Stellung. Die Ankerplatte 55 befindet sich beabstandet zum Magnetkern 51.

Wird die Solenoid-Einheit, genauer der Elektromagnet, elektrisch bestromt, so wird die Ankerplatte 55 vom Magnetkern 51 angezogen, wodurch die Ankerspindel 54 in Längsrichtung bewegt wird. Die Ankerspindel 54 bewegt sich relativ zur Führungs- und Prellbuchse 53 zum freien Ende des Gas-Injektors hin.

Aufgrund der Verbindung von Ankerspindel 54, Injektorschaft 21 und Ventilkegel 6 wird der Ventilteller 65 nach aussen in Abströmrichtung vom Ventilsitz 86, d.h. dem ersten Anschlag, wegbewegt. Das Ventil öffnet sich und die Ventildurchgangsöffnung 69, gebildet durch den Raum zwischen dem Ventilsitz 86 und dem Dichtfläche 66, wird freigegeben.

Gas, welches vom Gasanschluss 11 über die Gaskammer 18 entlang des Zwischenraums, gebildet durch den äusseren Mantel der Stösselstange 21 und der inneren Oberfläche des Injektorschafts 20, in Richtung Ventilkegel 6 geströmt ist und entlang der Längsnuten 72 des der Ventilführung 7 bis zum Ventilteller 65 gelangt ist, kann durch das nun geöffnete Ventil entlang der kegelförmigen Dichtfläche 66 und des Ventilsitzes 86 nach aussen gelangen und somit beispielsweise in eine Brennkammer oder einen Vorkammer eingespritzt werden.

Die hohle Ausbildung der Stösselstange 21 und ihre Druckausgleichskanäle 212 und 213 in den Stösselstangenköpfen, dienen dazu, dass sich die relative lange Stösselstange 21 ungebremst entsprechend der Massgabe des Solenoids bewegen lässt. Diese Hohlräume sind üblicherweise auch mit dem eingelassenen Gas gefüllt.

Die Schliessung des Ventils erfolgt durch die Schliessfeder 23. Sie schiebt den Ventilkegel 6 zurück, bis der Ventilteller 65 wieder am Ventilsitz 86 anliegt.

In einer bevorzugten Ausführungsform entkoppeln sich die Stösselstange 21 und die Ankerspindel 54 mit der Ankerplatte 55 während des Schliessvorgangs vom Ventilkegel 6. Trotzdem bleiben die einzelnen Teile radial zueinander geführt. Dadurch wird die Aufprallenergie im Ventilsitz verringert und die Lebensdauer des Injektors erhöht.

Aufgrund der beschleunigten Trägheitsenergie werden Stösselstange 21, Ankerspindel 54 und Ankerplatte 55 in Richtung des oberen Anschlags 19 gefahren. Die überschüssige kinetische Energie wird somit gegen den Anschlag 19 gefahren. Der Anschlag 19 wirkt als kraftverzehrendes Dämpfungselement, wobei die Ankerplatte 55 an diesem Anschlag 19 anschlagen kann.

Die Druckfeder 50 schiebt die Ankerplatte 55 und somit die Ankerspindel 54 und die Stösselstange 21 in ihre Ausgangs- und Ruhepositionen zurück. Die beweglichen Teiles des Gas-Injektors, insbesondere die Ankerpspindel 54, die Stösselstange 21 sowie der Ventilkegel 6 liegen somit wieder spielfrei axial aneinander an. Der Ventilkegel 6 gibt somit die Referenzposition für diese Teile vor und der Gas-Injektor ist für den nächsten Schaltvorgang wieder vorbereitet.

Der erfindungsgemässe Gas-Injektor lässt sich relativ klein und schlank ausbilden. Er minimiert Schaltverzögerungen, vermeidet Toträume und verhindert eine Verschmutzung des Ventils.

### BEZUGSZEICHENLISTE

| | | | |
|---|---|---|---|
| 1 | Basiseinheit | 202 | offenes Ende |
| 10 | Basisgehäuse | 203 | Durchgangsöffnung |
| 100 | Deckel | 204 | äussere Stufe |
| 11 | Gasanschluss | 205 | äussere Nut |
| 12 | Kühlmitteleinlass | 206 | innere Stufe |
| 13 | Kühlmittelauslass | 207 | Innengewinde |
| 14 | Stecker | 208 | Nut zur Aufnahme eines O-Rings |
| 15 | Kühlmittelkammer | | |
| 16 | O-Ring | 21 | Stösselstange |
| 17 | Befestigungsmutter | 210 | erster Stösselstangenkopf |
| 18 | Gaskammer | 211 | zweiter Stösselstangenkopf |
| 19 | oberer Anschlag | 212 | erster Druckausgleichskanal |
| | | 213 | zweiter Druckausgleichskanal |
| 2 | Injektorlanze | 214 | Lötbohrung |
| 20 | Injektorschaft | 215 | dünnwandiges Rohr |
| 200 | Schaftkopf | 216 | erste Eingriffsöffnung |
| 201 | Injektorrohr | 217 | zweite Eingriffsöffnung |
| 22 | Hohl-Druckschraube | 61 | erster Abschnitt |
| 23 | Schliessfeder | 62 | zweiter Abschnitt |
| 25 | Kontermutter | 63 | dritter Abschnitt |
| 26 | Federteller | 65 | Ventilteller |
| 27 | Sprengring | 66 | Dichtfläche |
| | | 67 | Keilfläche |
| 3 | Vorkammer | 68 | Ventilstange |
| 30 | Düsenbohrungen | 69 | Ventildurchgangsöffnung |
| | | | |
| 4 | Gehäuse | 7 | Ventilführung |
| 40 | Zündkerze | 70 | Grundkörper |
| | | 71 | Ventilschaftführung |
| 5 | Solenoid-Einheit | 72 | Längsnut |
| 50 | Druckfeder | 74 | Federführung |
| 51 | Magnetkern | 75 | Flansch |
| 52 | Spule | | |
| 520 | Anschluss-Pin | 8 | Ventilkörper |
| 53 | Führungs- und Prellbuchse | 80 | erster Abschnitt |
| 54 | Ankerspindel | 81 | zweiter Abschnitt |
| 540 | Ankerspindelkopf | 82 | dritter Abschnitt |
| 541 | Ankerspindelfuss | 83 | erste Verjüngung |
| 542 | erster Abschnitt | 84 | zweite Verjüngung |
| 543 | Freistellnut | 840 | äusserer Anschlag |
| 544 | zweiter Abschnitt | 85 | Durchgangsöffnung |
| 545 | dritter Abschnitt | 86 | Ventilsitz |
| 546 | Spiralrille | 87 | zweiter Anschlag |
| 55 | Ankerplatte | 88 | Aussenstruktur |
| 56 | Kontermutter | | |
| | | G | Gas-Luftgemisch |
| 6 | Ventilkegel | | |
| 60 | Ventilfuss | | |

## Patentansprüche

1. Gas-Injektor mit einer Injektorlanze (2), einer Antriebseinheit (5), einer Stösselstange (21) und einem Ventil (6, 8), wobei die Injektorlanze (2) ein freies Ende zum Einspritzen von Gas in eine externe Einheit aufweist und wobei die Antriebseinheit (5) eine Linearbewegung der Stösselstange (21) erzeugt, wodurch die Stösselstange (21) das Ventil (6, 8) betätigt und eine Ventildurchlassöffnung (69) freisetzt, um das Gas einzuspritzen, wobei die Ventildurchlassöffnung (69) im Bereich des freien Endes der Injektorlanze (2) angeordnet ist, wobei die Injektorlanze (2) einen Schaft (20) aufweist und die Stösselstange (21) innerhalb des Schafts (20) angeordnet ist und relativ zu diesem linear verschiebbar ist, wobei das freie Ende der Injektorlanze (2) durch einen Ventilkörper (8) gebildet ist, wobei der Ventilkörper (8) an einem freien Ende (20) des Schafts (20) angeordnet ist und wobei der Ventilkörper (68) eine Durchgangsöffnung (85) aufweist, die durch den gesamten Ventilkörper (8) verläuft und wobei der Ventilkörper (8) einen ersten Abschnitt (80) aufweist, der ein vorderstes freies Ende des Gas-Injektors bildet, **dadurch gekennzeichnet, dass** der erste Abschnitt (80) über eine erste Verjüngung (83) in einen zweiten Abschnitt (81) übergeht, dass im Bereich des ersten Abschnitts (80) zum vorderen freien Ende des Gas-Injektors hin der Durchmesser erweitert ist, wobei die Durchgangsöffnung (85) in diesem Bereich einen gleich bleibenden Durchmesser aufweist, bis sie in Richtung entgegengesetzt zur Abströmrichtung des Gases zu einem radial verlaufenden Sims oder Balkon führt, der als Anschlag dient und der den Ventilsitz (86) bildet.

2. Gas-Injektor nach Anspruch 1, wobei das Ventil (6, 8) das einzige Ventil des Gas-Injektors ist.

3. Gas-Injektor nach einem der Ansprüche 1 oder 2, wobei die Antriebseinheit eine Solenoid-Einheit (5) umfasst und wobei die Stösselstange (21) mit einer Ankerplatte (55) der Solenoid-Einheit (5) verbunden ist, wobei die Ankerplatte (55) durch Betätigung eines Elektromagneten der Solenoid-Einheit (5) bewegbar ist.

4. Gas-Injektor nach Anspruch 3, wobei eine Ankerspindel (54) vorhanden ist, welche die Stösselstange (21) mit der Ankerplatte (55) verbindet, wobei die Ankerspindel (54) den Elektromagneten durchsetzt.

5. Gas-Injektor nach Anspruch 4, wobei die Ankerspindel (54) massiv ausgeführt ist.

6. Gas-Injektor nach einem der Ansprüche 1 bis 5, wobei das Ventil einen Ventilkegel (6) mit einer Ventilstange (68) und einem daran angeordneten Ventilteller (65) aufweist und wobei die Ventilstange (68) mit der Stösselstange (21) verbunden ist und gemeinsam mit ihr linear verschiebbar ist.

7. Gas-Injektor nach Anspruch 6, wobei die Ventilstange (68) massiv ausgeführt ist.

8. Gas-Injektor nach einem der Ansprüche 6 oder 7, wobei der Ventilteller (65) eine entgegengesetzt zu einer Abströmrichtung des Gases gerichtete Dichtfläche (66) aufweist, welche an dem Ventilsitz (86) dichtend anliegt, um so die Ventildurchlassöffnung und damit das Ventil zu schliessen.

9. Gas-Injektor nach Anspruch 8, wobei der Ventilkegel (6) in Abströmrichtung verschiebbar ist, um das Ventil zu öffnen.

10. Gas-Injektor nach einem der Ansprüche 6 bis 9, wobei zwischen der Stösselstange (21) und dem Ventilkegel (6) eine Schliessfeder (23) vorhanden ist, welche das Ventil in geschlossener Stellung hält und/oder dieses schliesst.

11. Gas-Injektor nach den Ansprüchen 3 und 10, wobei eine zweite Feder (50) vorhanden ist, welche nach einem Schliessvorgang des Ventils mindestens die Stösselstange (21), und vorzugsweise alle beweglichen Teile der Antriebseinheit (5), wieder in eine Ausgangsposition bringt, wobei die zweite Feder (50) eine Federkraft aufweist, welche geringer ist als die Federkraft der Schliessfeder (23).

12. Gas-Injektor nach einem der Ansprüche 6 bis 11, wobei beim Schliessen des Ventils der Ventilkegel (6) von der Stösselstange (21) entkoppelt ist.

13. Gas-Injektor nach einem der Ansprüche 6 bis 12, wobei sich beim Öffnen des Ventils zwischen dem Ventilteller (65) und dem Ventilsitz (86) die Ventildurchgangsöffnung (69) ergibt.

14. Gas-Injektor nach einem der Ansprüche 1 bis 13, wobei die Stösselstange (21) hohl ausgebildet ist.

## Claims

1. Gas injector having an injector lance (2), a drive unit (5), a tappet rod (21) and a valve (6, 8), wherein the injector lance (2) has a free end for injecting gas into an external unit and wherein the drive unit (5) generates a linear movement of the tappet rod (21), whereby the tappet rod (21) actuates the valve (6, 8) and releases a valve passage opening (69) in order to inject the gas, wherein the valve passage opening (69) is arranged in the region of the free end of the injector lance (2), wherein the injector lance (2) has a shaft (20) and the tappet rod (21) is arranged within the shaft (20) and is linearly displaceable relative thereto, wherein the free end of the injector lance (2) is formed by a valve body (8), wherein the valve body (8) is arranged at a free end (20) of the shaft (20) and wherein the valve body (8) has a through-opening (85), which extends through the entire valve body (8) and wherein the valve body (8) comprises a first portion (80) which forms a front free end of the gas injector form, **characterized in that** the first portion (80) merges into a second portion (81) via a first taper (83), **in that**, in the region of the first portion (80) to the front end of the gas injector, the diameter of the through-opening (85) is widened, wherein the through-opening (85) comprises in this region a constant diameter, until it leads in direction opposite to the outflow direction of the gas to a radially extending ledge or balcony, which serves as a stop and which forms the valve seat (86).

2. Gas injector as claimed in claim 1, wherein the valve (6, 8) is the sole valve of the gas injector.

3. Gas injector as claimed in one of claims 1 or 2, wherein the drive unit comprises a solenoid unit (5) and wherein the tappet rod (21) is connected to an armature plate (55) of the solenoid unit (5), wherein the armature plate (55) is movable by actuating an electromagnet of the solenoid unit (5).

4. Gas injector as claimed in claim 3, wherein an armature spindle (54) is present which connects the tappet rod (21) to the armature plate (55), wherein the armature spindle (54) passes through the electromagnet.

5. Gas injector as claimed in claim 4, wherein the armature spindle (54) is designed to be solid.

6. Gas injector as claimed in one of claims 1 to 5, wherein the valve has a valve cone (6) having a valve rod (68) and a valve disk (65) arranged thereon, and wherein the valve rod (68) is connected to the tappet rod (21) and is linearly displaceable together therewith.

7. Gas injector as claimed in claim 6, wherein the valve rod (68) is designed to be solid.

8. Gas injector as claimed in one of claims 6 or 7, wherein the valve disk (65) has a sealing face (66) directed contrary to a discharge direction of the gas, which lies in a sealing manner against the valve seat (86) in order to thereby close the valve passage opening and therefore the valve.

9. Gas injector as claimed in claim 8, wherein the valve cone (6) is displaceable in the discharge direction in order to open the valve.

10. Gas injector as claimed in one of claims 6 to 9, wherein a closing spring (23) is present between the tappet rod (21) and the valve cone (6), which closing spring holds the valve in the closed position and/or closes it.

11. Gas injector as claimed in claims 3 and 10, wherein a second spring (50) is present, which, after a closing procedure of the valve, brings at least the tappet rod (21), and preferably all moving parts of the drive unit (5), back into a starting position, wherein the second spring (50) has a spring force which is lower than the spring force of the closing spring (23).

12. Gas injector as claimed in one of claims 6 to 11, wherein the valve cone (6) is uncoupled from the tappet rod (21) as the valve closes.

13. Gas injector according to one of claims 6 to 12, wherein the valve-through opening (69) is produced between the valve disk (65) and the valve seat (86) when the valve opens.

14. Gas injector as claimed in one of claims 1 to 13, wherein the tappet rod (21) is designed to be hollow.

## Revendications

1. Injecteur de gaz comprenant une lance d'injection (2), une unité d'entraînement (5), une tige de poussée (21) et une soupape (6, 8), la lance d'injection (2) comportant une extrémité libre destinée à injecter du gaz dans une unité extérieure et l'unité d'entraînement (5) générant un mouvement linéaire de la tige de poussée (21) permettant à la tige de poussée (21) d'actionner la soupape (6, 8) et de libérer une ouverture de passage de soupape (69) afin d'injecter le gaz, l'ouverture de passage de soupape (69) étant ménagée au niveau de l'extrémité libre de la lance d'injection (2), la lance d'injection (2) comportant un arbre (20) et la tige de poussée (21) étant disposée à l'intérieur de l'arbre (20) et pouvant être déplacée linéairement par rapport à celui-ci, l'extrémité libre de la lance d'injection (2) étant formée par un corps de soupape (8), le corps de soupape (8) étant disposé à une extrémité libre (20) de l'arbre (20) et le corps de soupape (68) comportant une ouverture traversante (85) qui traverse tout le corps de soupape (8) et le corps de soupape (8) comportant une première portion (80) qui forme une extrémité libre la plus en avant de l'injecteur de gaz, **caractérisé en ce que** la première portion (80) se transforme en une deuxième portion (81) via un premier amincissement (83), **en ce que** dans la région de la première portion (80) le diamètre est agrandi vers l'extrémité avant libre de l'injecteur de gaz, l'ouverture de passage (85) présentant dans cette région un diamètre constant, jusqu'à ce qu'elle conduise, dans la direction opposée à la direction d'écoulement du gaz, à un rebord ou un balcon qui s'étend radialement et qui sert de butée et forme le siège de soupape (86).

2. Injecteur de gaz selon la revendication 1, la soupape (6, 8) étant la seule soupape de l'injecteur de gaz.

3. Injecteur de gaz selon l'une des revendications 1 et 2, l'unité d'entraînement comprenant une unité formant solénoïde (5) et la tige de poussée (21) étant reliée à une plaque d'ancrage (55) de l'unité formant solénoïde (5), la plaque d'ancrage (55) pouvant être déplacée par actionnement d'un électroaimant de l'unité formant solénoïde (5).

4. Injecteur de gaz selon la revendication 3, une broche d'ancrage (54) étant présente qui relie la tige de poussée (21) à la plaque d'ancrage (55), l'axe d'induit (54) pénétrant dans l'électroaimant.

5. Injecteur de gaz selon la revendication 4, la broche d'induit (54) étant pleine.

6. Injecteur de gaz selon l'une des revendications 1 à 5, la soupape comportant un cône de soupape (6) pourvu d'une tige de soupape (68) et d'un disque de soupape (65) disposés sur celle-ci, et la tige de soupape (68) étant reliée à la tige de poussée (21) et pouvant être déplacée linéairement avec celle-ci.

7. Injecteur de gaz selon la revendication 6, la tige de soupape (68) étant pleine.

8. Injecteur de gaz selon l'une des revendications 6 et 7, le disque de soupape (65) comportant une surface d'étanchéité (66) qui est opposée à un sens d'évacuation de gaz et qui vient en appui de manière étanche sur le siège de soupape (86) afin de fermer l'ouverture de passage de soupape et donc la soupape.

9. Injecteur de gaz selon la revendication 8, le cône de soupape (6) pouvant être déplacé dans le sens d'évacuation afin d'ouvrir la soupape.

10. Injecteur de gaz selon l'une des revendications 6 à 9, un ressort de fermeture (23) étant présent entre la tige de poussée (21) et le cône de soupape (6) et maintenant la soupape en position fermée et/ou fermant celle-ci.

11. Injecteur de gaz selon les revendications 3 et 10, un deuxième ressort (50) étant présent qui, après un processus de fermeture de la soupape, ramène au moins la tige de poussée (21), et de préférence toutes les pièces mobiles de l'unité d'entraînement (5), dans une position initiale, le deuxième ressort (50) présentant une force qui est inférieure à la force du ressort de fermeture (23).

12. Injecteur de gaz selon l'une des revendications 6 à 11, le cône de soupape (6) étant désaccouplé de la tige de poussée (21) lorsque la soupape est fermée.

13. Injecteur de gaz selon l'une des revendications 6 à 12, l'ouverture de passage de soupape (69) étant obtenue lors de l'ouverture de la soupape entre le disque de soupape (65) et le siège de soupape (86).

14. Injecteur de gaz selon l'une des revendications 1 à 13, la tige de poussée (21) étant creuse.
